# EUROPÄISCHE PATENTSCHRIFT

(11) **EP 1 742 997 B1**
(45) Veröffentlichungstag und Bekanntmachung des Hinweises auf die Patenterteilung: **11.03.2009**
(21) Anmeldenummer: 05716553.2
(22) Anmeldetag: 07.04.2005
(51) Int. Cl.: C08L 33/12

(54) **FORMMASSE FÜR FORMKÖRPER MIT HOHER WITTERUNGSBESTÄNDIGKEIT**
MOULDING COMPOUND FOR MOULDINGS WITH HIGH WEATHER RESISTANCE
MATIERES FAÇONNABLES POUR LA PRODUCTION DE CORPS FAÇONNES PRESENTANT UNE RESISTANCE ELEVEE AUX INTEMPERIES

(30) Priorität: 05.05.2004 DE 102004022540
(43) Veröffentlichungstag der Anmeldung: 17.01.2007
(73) Patentinhaber: Evonik Röhm GmbH, 64293 Darmstadt (DE)
(72) Erfinder: HÖSS, Werner 2103 Block 10, Shanghai 200030 (CN); WICKER, Michael, 64342 Seeheim-Jugenheim (DE); SCHULTES, Klaus, 65193 Wiesbaden (DE); ALBRECHT, Klaus, 55129 Mainz (DE); MOHRMANN, Martin, 64331 Weiterstadt (DE)
(86) Internationale Anmeldenummer: PCT/EP2005/003652
(87) Internationale Veröffentlichungsnummer: WO 2005/108486

(56) Entgegenhaltungen:
- EP-A- 0 113 105
- PATENT ABSTRACTS OF JAPAN Bd. 2003, Nr. 12, 5. Dezember 2003 (2003-12-05) & JP 2003 292714 A (ASAHI KASEI CORP), 15. Oktober 2003 (2003-10-15)
- PATENT ABSTRACTS OF JAPAN Bd. 011, Nr. 394 (C-465), 23. Dezember 1987 (1987-12-23) & JP 62 156156 A (MITSUBISHI RAYON CO LTD), 11. Juli 1987 (1987-07-11)

## Beschreibung

Die Erfindung betrifft eine Formmasse für Formkörper mit hoher Witterungsbeständigkeit.

### Stand der Technik

EP 0 113 105 A1 beschreibt gegenüber thermischer Belastung resistente Methacrylat-Kunststoff-Gemische bestehend aus zwei Copolymeren. Copolymer 1 wird durch Polymerisation von Methylmethacrylat, einem aromatischen Vinylkomponente und Maleinsäureanhydrid erhalten, Copolymer II ist ein Polymerisat aus 80 - 100 Gew.-% Methylmethacrylat und 0 - 20 Gew.-% weiteren copolymerisierbaren ethylenischen Monomeren.

Insbesondere kann das Copolymer I aus 50 - 98 Gew.-% Methylmethacrylat, 1 bis 25 Gew.-% Styrol und 1 bis 25 Gew.-% Maleinsäureanhydrid bestehen. Das Herstellungsverfahren wird als nicht kritisch bezeichnet. Konkret wird z. B. vorgeschlagen, die genannten Monomere in Gegenwart von 2,2'-Azobis(2,4-dimethylvalerinonitril) als Initiator und t-Dodecylmercaptan als Molekulargewichtsregler durch partielle Polymerisation zu einem Präpolymerisat umzuwandeln. Das Präpolymerisat wird anschließend in Gegenwart von 2,2'-Laurylperoxid als Initiator und t-Dodecylmercaptan in einer Polymerisationskammer zunächst für 30 Minuten bei 80 °C und dann nochmals für 2 Stunden bei 130 °C zu einer Platte polymerisiert. Die Polymerisat-Platte wird anschließend zu einem Granulat zerkleinert. Über das Molekulargewicht des Polymerisats werden keine Angaben gemacht, es ist jedoch zu beachten, daß das Herstellungsverfahren zwangsläufig zu vergleichsweise hohen Molekulargewichten, einhergehend mit Lösungsviskositäten in Chloroform bei 25 °C (ISO 1628 - Teil 6) von über 60 ml/g, führen muß.

Gemäß EP 0 113 105 A1 werden verschiedene Mischungen des Copolymerisats I mit einer handelsüblichen Polymethylmethacrylat-Formmasse als Copolymerisat II hergestellt und auf ihre Eigenschaften untersucht. Man erhält Kunststoffmischungen mit hoher Transparenz, nicht feststellbarer Neigung zur Vergilbung bei Spritzgussteilen, sowie hoher Bewitterungsresistenz nach 1100-stündiger Exposition.

### Aufgabe und Lösung

Ausgehend von der EP 0 113 105 A1 sollte eine Formmasse bereitgestellt werden, deren Witterungsbeständigkeit nochmals verbessert ist und die eine Fließfähigkeit MVR (230 °C/3,8 kg) insbesondere in dem für den Spritzguß günstigen Bereich von 2,5 bis 5,0 cm³/10 min aufweist. Insbesondere soll die Oberfläche von langzeitbewitterten Proben nur geringe oder keine Rissbildung aufweisen. Die Vicaterweichungstemperatur VET (ISO 306-B50) sollte gegenüber der EP 0 113 105 A1 nicht oder nur geringfügig verschlechtert sein und mindestens einen Wert von 109 °C erreichen.

Die Aufgabe wird gelöst durch eine Formmasse, umfassend aus folgenden Komponenten
a) einem Copolymer (I) polymerisiert zu 90 -100 Gew.-% aus Methylmethacrylat, Styrol und Maleinsäureanhydrid und gegebenenfalls 0 - 10 Gew.-% weiteren mit Methylmethacrylat copolymerisierbaren Monomeren, charakterisiert durch eine Lösungsviskosität in Chloroform bei 25 °C (ISO 1628 -Teil 6) von kleiner/gleich 55 ml/g
b) einem (Co)polymer (II), das ein Polymerisat aus 95 bis 99,5 Gew.-% Methylmethacrylat und 0,5 bis 5 Gew.-% Methylacrylat ist, mit einer Lösungsviskosität in Chloroform bei 25 °C (ISO 1628 - Teil 6) von 50 bis 55 ml/g, sowie
c) optional üblichen Zusatz, Hilfs- und/oder Füllstoffen,
dadurch gekennzeichnet, daß das Copolymer (I) eine Lösungsviskosität in Chloroform bei 25 °C (ISO 1628 - Teil 6) von kleiner/gleich 55 ml/g aufweist.

### Ausführung der Erfindung

Die erfindungsgemäße Formmasse, umfasst bzw. besteht aus folgenden Komponenten
a. einem Copolymer (I) polymerisiert zu 90 -100 Gew.-% aus Methylmethacrylat, Styrol und Maleinsäureanhydrid und gegebenenfalls 0 - 10 Gew.-% weiteren mit Methylmethacrylat copolymerisierbaren Monomeren, charakterisiert durch eine Lösungsviskosität in Chloroform bei 25 °C (ISO 1628 - Teil 6) von kleiner/gleich 55 ml/g
b. einem (Co)polymer (II), polymerisiert aus 95 bis 99,5 Gew.-% Methylmethacrylat und 0,5 bis 5 Gew. -% Methylacrylat, mit einer Lösungsviskosität in Chloroform bei 25 °C (ISO 1628 -Teil 6) von 50 bis 55 ml/g, sowie
c. optional üblichen Zusatz, Hilfs- und/oder Füllstoffen

Die vorteilhaften Eigenschaften der erfindungsgemäßen Formmasse beruhen im wesentlichen auf der Mischung von Copolymer (I) mit dem (Co)polymer (II). Entscheidend für die gegenüber der EP 0 113105 A1 verbesserten Eigenschaften ist das niedrige Molekulargewicht des Copolymers (I), charakterisiert durch eine Lösungsviskosität in Chloroform bei 25 °C (ISO 1628 - Teil 6) von kleiner/gleich 55 ml/g. Es versteht sich, daß die Formmasse außer dem Copolymer (I) und dem (Co)polymer (II) in vielen Fällen übliche Zusatz, Hilfs- und/oder Füllstoffe enthalten wird, z. B. Farbmittel, Pigmente oder organische Farbstoffe, bei eingefärbten Spritzgussteilen.

Ein aus der erfindungsgemäßen Formmasse z. B. durch Spritzguß hergestellter Probekörper kann gleichzeitig die folgenden Eigenschaften aufweisen.
■ eine Vicat - Erweichungstemperatur VET (ISO 306-B50) von mindestens 109, bevorzugt von 110 -115 °C,
■ einen Schmelzindex MVR (ISO 1133, 230 °C / 3,8 kg) von mindestens 2,5 bis 5,0, bevorzugt 2,8 bis 4,9 cm³/10 min.
■ eine Witterungsbeständigkeit im Xenotest (DIN EN ISO 4893, Teil 2) nach 10.000 Stunden, gekennzeichnet durch einen Gelbwert (DIN 6167) von kleiner/gleich 2,0.

Der Xenotest nach DIN EN ISO 4892, Teil 2 (Künstliches Bewittern oder Bestrahlen in Geräten - Gefilterte Xenonbogenbestrahlung) kann vom Fachmann z. B. unter folgenden Randbedingungen ausgeführt werden: Xenotest-Gerät, Typ Beta-LM; Untere Grenzwellenlänge Lambda G = 300 nm (Xenochrom 300 Filter); Schwarz-Standard-Temperatur = 65 +/- 3°C; Beregnungs-/Trockenzyklus: 18 min Beregnung, 102 min Trockenzeit; relative Feuchte in der Trockenperiode = 65 %; Gleichlauf = permanente Bestrahlung der Proben; Bestrahlungsstärke = Norm-Verfahren A (künstliches Bewittern); Messgerät: Xenosensitiv (Lambda 300 - 400 nm), regelbar zwischen 45 und 120 W/m², Normvorgabe 60 W/m².

Die Formmasse ist weiterhin dadurch gekennzeichnet, daß die Zunahme des Gelbwertes (DIN 6167 Lichtart D65/10°, 3mm) eines aus der Formmasse hergestellten Probekörpers nach Bewitterung im Xenotest (DIN EN ISO 4893, Teil 2) für 10.000 Stunden nicht mehr als 1,5, bevorzugt nicht mehr als 1,0 Einheiten beträgt.

Die Formmasse zeichnet sich dadurch aus, daß ein aus der Formmasse hergestellter Probekörper nach Bewitterung im Xenotest (DIN EN ISO 4893, Teil 2) für 5.000, sogar nach 10.000 Stunden noch keine mit dem bloßen Auge sichtbare Rissbildung aufweist.

Die Formmasse zeichnet sich dadurch aus, daß ein aus der Formmasse hergestellter Probekörper eine Ritzhärte nach Taber 203 bei einer Auflagekraft von 3,0 N von nicht mehr als 3, insbesondere nicht mehr als 2,8 µm Ritztiefe aufweist.

### Copolymer (I)

Das (Co)polymer (I) besteht zu 90 bis 100, insbesondere zu 99 bis 100 Gew.-% aus Methylmethacrylat, Styrol und Maleinsäureanhydrid. Gegebenenfalls können zu 0 - 10, insbesondere zu 0 bis 1 Gew.-% weiterer radikalisch polymerisierbarer Comonomere, z. B. α-Methylstyrol oder C1- bis C4-Alkyl(meth)acrylate, insbesondere Methylacrylat, Ethylacrylat oder Butylacrylat, insbesondere n-Butylacrylat enthalten sein,

Besonders bevorzugt besteht das Copolymer (I) ausschließlich aus radikalisch polymerisierten Einheiten von Methylmethacrylat, Styrol und Maleinsäureanhydrid

Geeignete Mengenanteile können z. B. sein:
50 bis 90, bevorzugt 70 bis 80 Gew.-% Methylmethacrylat,
10 bis 20, bevorzugt 12 bis 18 Gew.-% Styrol und
5 bis 15, bevorzugt 8 bis 12 Gew.-% Maleinsäureanhydrid

Das Copolymer (I) weist eine Lösungsviskosität in Chloroform bei 25 °C (ISO 1628 - Teil 6) von kleiner/gleich 55, bevorzugt kleiner/gleich 50, insbesondere 40 bis 55, besonders bevorzugt von 43 - 50 ml/g auf.

Dies kann einem Molekulargewicht M_{w} (Gewichtsmittel) von 95 000 g/mol (Bestimmung von M_{w} mittels Gelpermeationschromatographie unter Bezug auf Polymethylmethacrylat als Eichstandard) entsprechen. Die Bestimmung des Molekulargewichts M_{w} kann beispielsweise per Gelpermeationschromatographie oder per Streulichtmethode erfolgen (siehe z. B. H. F. Mark et al., Encyclopedia of Polymer Science and Engineering, 2nd. Edition, Vol. 10, Seiten 1 ff., J. Wiley, 1989).

Entsprechende Copolymere können in an sich bekannter Weise durch radikalische Polymerisation erhalten werden. EP-A 264 590 beschreibt z. B. ein Verfahren zur Herstellung einer Formmasse aus einem Monomerengemisch aus Methylmethacrylat, Vinylaromat, Maleinsäureanhydrid sowie gegebenenfalls aus einem niederen Alkylacrylat, bei dem die Polymerisation bis zu einem Umsatz von 50 % in An- oder Abwesenheit eines nicht polymerisierbaren organischen Lösungsmittels durchgeführt wird und bei dem die Polymerisation ab einem Umsatz von mindestens 50 % im Temperaturbereich von 75 bis 150 °C in Gegenwart eines organischen Lösungsmittels bis zu einem Umsatz von mindestens 80 % fortgesetzt wird und anschließend die niedermolekularen flüchtigen Bestandteile verdampft werden.

In JP-A 60-147 417 wird ein Verfahren zur Herstellung einer hochwärmeformbeständigen Polymethacrylat-Formmasse beschrieben, bei dem eine Monomermischung aus Methylmethacrylat, Maleinsäureanhydrid und mindestens einem Vinylaromaten in einen Polymerisationsreaktor, der für Lösungs- oder Massepolymerisation geeignet ist, bei einer Temperatur von 100 bis 180 °C eingespeist und polymerisiert wird. DE-OS 44 40 219 beschreibt ein weiteres Herstellungsverfahren.

Das Copolymer (I) kann z. B. hergestellt werden, indem man eine Monomermischung aus z. B. 6355 g Methylmethacrylat, 1271 g Styrol und 847 g Maleinsäureanhydrid mit 1,9 g tert.-Butylperneodecanoat und 0,85 g tert.-Butylperoxi-3,5,5-trimethylhexanoat als Polymerisationsinitiator und 19,6 g 2-Mercaptoethanol als Molekulargewichtsregler sowie mit 4,3 g Palmitinsäure versetzt. Das resultierende Gemisch kann in eine Polymerisationskammer gefüllt und z. B. 10 Minuten entgast werden. Danach kann im Wasserbad z. B. 6 Stunden bei 60°C, nachfolgend 30 Stunden bei 55°C Wasserbadtemperatur polymerisiert werden. Nach etwa 30 Stunden erreicht das Polymerisationsgemisch mit etwa 126°C seine Maximaltemperatur. Nach Entfernung der Polymerisationskammer aus dem Wasserbad wird das Polymerisat entsprechend der Komponente a) in der Polymerisationskammer noch etwa 7 Stunden z. B. bei 117°C im Luftschrank getempert.

### (Co)polymer (II)

Das Copolymer (II) ist ein (Meth)acrylat(co)polymer mit einer Lösungsviskosität in Chloroform bei 25 °C (ISO 1628 - Teil 6) von 50 bis 55, bevorzugt 52 bis 54 ml/g.

Dies kann einem Molekulargewicht Mw (Gewichtsmittel) im Bereich von 80.000 bis 200.000 g/mol, bevorzugt von 100.000 bis 150.000 g/mol entsprechen. Die Bestimmung des Molekulargewichts M_{w} kann beispielsweise per Gelpermeationschromatographie oder per Streulichtmethode erfolgen (siehe z. B. H. F. Mark et al., Encyclopedia of Polymer Science and Engineering, 2nd. Edition, Vol. 10, Seiten 1 ff., J. Wiley, 1989).

Vorzugsweise liegt das mittlere Molekulargewicht M_{w} des Copolymeren (II) im Bereich von 90.000 g/mol bis 200.000 g/mol, insbesondere 100.000 g/mol bis 150.000 g/mol.

Das (Co)polymer (II) besteht aus 95 bis 99,5 Gew.-% Methylmethacrylat und 0,5 bis 5, bevorzugt 1 bis 4 Gew.-% Methylacrylat.

Das (Co)polymer (II) kann eine Vicaterweichungstemperatur VET (ISO 306-B50) von mindestens 107, bevorzugt von 108 bis 114 °C aufweise. Der Schmelzindex MVR (ISO 1133, 230 °C / 3,8 kg) kann z. B. im Bereich von größer/gleich 2,5 cm³/10 min liegen.

### Übliche Zusatz-, Hilfs- und/oder Füllstoffe

Die Formmasse kann neben der Polymermischung aus dem Copolymer (I) und dem (Co)polymer (II) in an sich bekannter Weise noch übliche Zusatz-, Hilfs- und/oder Füllstoffe, wie z. B. Thermostabilisatoren, UV-Stabilisatoren, UV-Absorber, Antioxidantien und/oder Farbmittel, Pigmente oder organische Farbstoffe, enthalten. Bevorzugt sind nicht mehr als 10, besonders bevorzugt nicht mehr als 5, insbesondere nicht mehr als 2 Gew.-% übliche Zusatz-, Hilfs- und/oder Füllstoffe enthalten. Gegebenenfalls kann die Formmasse auch gar keine Zusatz-, Hilfs- und/oder Füllstoffe enthalten.

Für das Spritzgussverfahren sind insbesondere Gleitmittel bzw. Formtrennmittel von Bedeutung, die ein mögliches Anhaften der Polymermischung an die Spritzgussform vermindern bzw. ganz verhindern können. Weiterhin sind insbesondere viele Formkörper, insbesondere Spritzgußteile nicht transparent sondern gefärbt, enthalten also Farbmittel, Pigmente oder organische Farbstoffe, als Zusatzstoffe. Teile für Außenanwendungen enthalten in der Regel UV-Stabilisatoren, UV-Absorber, Antioxidantien zum zusätzlichen Schutz vor Verwitterung.

Als Hilfsstoffe können demnach Gleitmittel, z. B. ausgewählt aus der Gruppe der gesättigten Fettsäuren mit weniger als C₂₀, bevorzugt C₁₆ bis C₁₈ Kohlenstoffatomen oder der gesättigten Fettalkohole mit weniger als C₂₀, bevorzugt C₁₆ bis C₁₈ Kohlenstoffatomen enthalten sein. Bevorzugt sind geringe Mengenanteile von höchstens 0,25, z. B. 0,05 bis 0,2 Gew.-%, bezogen auf die Polymermischung enthalten.

Geeignet sind z. B. Stearinsäure, Palmitinsäure, technische Gemische aus Stearin- und Palmitinsäure. Weiterhin geeignet sind z. B. n-Hexadecanol, n-Octadecanol, sowie technische Gemische aus n-Hexadecanol und n-Octadecanol.

Ein besonders bevorzugtes Gleit- bzw. Formtrennmittel ist Stearylalkohol.

### Herstellung der Formmasse

Die Formmasse bzw. Polymermischung kann durch trockenes Abmischen der Komponenten a) und b), die als Pulver, Perlen oder bevorzugt Granulate vorliegen können, hergestellt werden.

Bevorzugt liegen die Copolymere (I) und das (Co)polymer (II) in einem Verhältnis Copolymere (I) zu (Co)polymer (II) von 95 zu 5 bis 5 zu 95, bevorzugt 20 zu 80 bis 80 zu 20, insbesondere 20 zu 60 bis 80 zu 40 jeweils bezogen auf Gewichtsteile vor.

Die Polymermischung kann auch durch Schmelzen und Vermengen der Einzelkomponenten im Schmelzezustand oder durch Schmelzen trockener Vormischungen der Einzelkomponenten zu einer gebrauchsfertigen Formmasse verarbeitet werden. Dies kann z. B. in Ein- oder Zweischneckenextrudern erfolgen. Das erhaltene Extrudat kann anschließend granuliert werden. Übliche Zusatz, Hilfs- und/oder Füllstoffe c) können direkt zugemischt oder später vom Weiterverarbeiter nach Bedarf zugegeben werden.

### Verwendungen der Formmasse/Formkörper

Aus der erfindungsgemäßen Formmasse lassen sich, in an sich bekannter Weise, Formkörper, ganz oder teilweise durch thermoplastische Verarbeitung, insbesondere Spritzguß oder Extrusion, durch Coextrusion, Laminieren oder auch durch Lackieren herstellen. Die erfindungsgemäßen Formkörper zeichnen sich aufgrund der enthaltenen erfindungsgemäßen Formmasse durch eine hohe Witterungsbeständigkeit, geringe Neigung zum Vergilben und geringe Neigung zur Rissbildung aus. Auch ist die Oberfläche sehr kratzfest.

Die Formkörper bestehen ganz bzw. teilweise aus der erfindungsgemäßen Formmasse, die bevorzugt zu 90 -100 Gew.-% aus dem Copolymer (I) und dem (Co)polymer (II) und gegebenenfalls zu 0 bis 10 Gew.-% aus üblichen Zusatz, Hilfs- und/oder Füllstoffen besteht.

Extrudierte Formkörper können z. B. massive Platten, Wellplatten, Hohlkammerplatten, insbesondere Stegplatten, Stegmehrfachplatten, Stegdoppelplatten, Stegdreifach- oder Stegvierfachplatten oder Stegplatten mit Fachwerkgeometrie sein.

Spritzgegossene Formkörper können z. B. Teile von Haushaltsgeräten, Kommunikationsgeräten, Hobby- oder Sportgeräten, Karosserieteile oder Teile von Karosserieteilen im Automobil-, Schiffs- oder Flugzeugbau wie Leuchtenabdeckungen, Instrumentenabdeckungen, Tachometerabdeckungen, Displays, Blenden oder Zierleisten sein. Bei Teilen von Formkörpern, z. B. Karosserieteilen im Automobil-, Schiffs- oder Flugzeugbau, kann es sich um Teile mit einem Schichtaufbau handeln, bei der die erfindungsgemäße Formmasse z. B. als äußere Klarlackschicht und/oder als innere mit einem Farbmittel versehene Schicht verwendet wird.

Typische Beispiele für Karosserieteile oder Teile von Karosserieteilen von Automobilen sind z. B. Leuchtenabdeckungen, Instrumentenabdeckungen, Tachometerabdeckungen, Blenden, Zierleisten, Spoiler, Dachmodule oder Außenspiegelgehäuse.

Die erfindungsgemäße Formmasse kann aufgrund der hohen Witterungsbeständigkeit und der relativ guten Kratzfestigkeit besonders vorteilhaft zum Beschichten von Oberflächen oder zum Imprägnieren von Holz verwendet werden.

Das Aufbringen kann z. B. geschehen, indem man die Formmasse in ein organisches Lösungsmittel oder ein Lösungsmittelgemisch einträgt und anschließend als Lack verarbeitet.

Alternativ kann das Beschichten von Holz im Spritzgussverfahren geschehen, durch Überspritzen eines Gegenstandes aus Holz, z. B. eines Schaltknaufs oder einer Blende, in einer Spritzgussform mit einer Schmelze der erfindungsgemäßen Formmasse.

### Beispiele

### A) Herstellung eines Copolymers (I)

Das Copolymer (I) ist ein Copolymerisat aus 75 Gew.-% Methylmethacrylat , 15 Gew.-% Styrol und 10 Gew.-% Maleinsäureanhydrid.

Eine Monomermischung aus 6355 g Methylmethacrylat, 1271 g Styrol und 847 g Maleinsäureanhydrid wird mit 1,9 g tert.-Butylperneodecanoat und 0,85 g tert.-Butylperoxi-3,5,5-trimethylhexanoat als Polymerisationsinitiator und 19,6 g 2-Mercaptoethanol als Molekulargewichtsregler sowie mit 4,3 g Palmitinsäure versetzt.

Das resultierende Gemisch wird in eine Polymerisationskammer gefüllt und 10 Minuten entgast. Danach wird im Wasserbad 6 Stunden bei 60°C, nachfolgend 30 Stunden bei 55°C Wasserbadtemperatur polymerisiert. Nach etwa 30 Stunden erreicht das Polymerisationsgemisch mit 126°C seine Maximaltemperatur. Nach Entfernung der Polymerisationskammer aus dem Wasserbad wird das Polymerisat in der Polymerisationskammer noch 7 Stunden bei 117°C im Luftschrank getempert.

Das resultierende Copolymer (I) ist klar und nahezu farblos und besitzt eine V.N. (Lösungsviskositätszahl nach ISO 1628-6, 25°C, Chloroform) von 48.7ml/g. Die Fließfähigkeit des Copolymerisats wurde nach ISO 1133 bei 230°C und 3,8kg mit MVR = 3,27 cm³/10min bestimmt.

### B) (Co)polymer (II)

Als (Co)polymer (II) wurde eingesetzt: ein handelsübliches Copolymerisat aus 99 Gew.-% Methylmethacrylat und 1 Gew.-% Methylacrylat mit einer Lösungsviskosität in Chloroform bei 25 °C (ISO 1628 - Teil 6) von etwa 53 ml/g.

### C) Copolymer (III)

### Zum Vergleich wurde eingesetzt:

Ein handelsübliches Copolymerisat (Copolymer III) aus 75 Gew.-% Methylmethacrylat , 15 Gew.-% Styrol und 10 Gew.-% Maleinsäureanhydrid mit einer Lösungsviskositätszahl nach ISO 1628-6, 25°C, Chloroform von 68 ml/g. Copolymer (III) unterscheidet sich daher nur im höheren Molekulargewicht von Copolymer (I).

### D) Herstellung der Formmassen A bis D

Die Formmassen A bis D wurden durch Mischen der Copolymere I, II bzw. III hergestellt.
Nach dem Einwiegen der Einzelkomponenten in eine 10l Mischtrommel wurde eine homogene Granulatmischung durch 5 Minuten mischen auf einem Taumelmischer hergestellt. Die Mischung wurde auf den Einfülltrichter eines Einschneckenextruders mit 35mm Schneckendurchmesser gegeben und bei 230°C Schmelzetemperatur extrudiert. Über den Gießkopf des Extruders wurden Stränge gezogen, die nach Abkühlung in einem Wasserbad und anschließend einer Luftkühlstrecke mittels eines Granulators zu Granulat geschnitten wurden.Gemäss dieser Verfahrensweise wurden sowohl Mischungen aus Copolymer I und Copolymer II sowie Mischungen aus Copolymer II und Copolymer III hergestellt.
Für die Prüfung der rheologischen Eigenschaften wurde eine Probemenge aus dem Granulat zur Durchführung der Prüfung eingesetzt. Aus dem erhaltenen Granulat wurden des weiteren Platten in den Abmaßen 110x110x3mm zur Bestimmung der Ritzhärte sowie Prüfkörper in den Abmessungen 65x40x3 für die Bewitterungstests und die optischen Messungen spritzgegossen.
Dazu wurde eine Spritzgussmaschine DEMAG D150, Fa. Demag; Schwaig verwendet. Die eingestellten Spritzgießparameter waren wie folgt:
Schmelzetemperatur 250 °C, Werkzeugtemperatur 70 °C, Spritzdruck: 120 - 160 bar, Nachdruck: 75 - 80 bar).

Folgende Tabelle beinhaltet die Produktzusammensetzungen, die durchgeführten Prüfungen sowie die erhaltenen Prüfergebnisse

**Tab: Zusammensetzung, Prüfungen und Prüfergebnisse verschiedener Polymermischungen Beispiel A und B erfindungsgemäß, Beispiel C und D nicht erfindungsgemäß**

| Beispiel | | A | B | C (Vgl.) | D (Vgl.) |
|---|---|---|---|---|---|
| | Lösungsviskositätszahl ISO 1628-6, 25°C, Chloroform | | | | |
| | [ml/g] | | | | |
| Copolymer (I) | 48,7 | 25 | 50 | - | - |
| (Co)polymer (II) | 53 | 75 | 50 | 75 | 50 |
| Copolymer (III) | 68 | - | - | 25 | 50 |
| Xenotest (DIN EN ISO 4892, Teil 2) Optische Beurteilung der Oberflächenbeschaffenheit | | | | | |
| Rissbildung nach 1.000h | | keine | keine | keine | keine |
| Rissbildung nach 5.000h | | keine | keine | wenig | wenig |
| Rissbildung nach 10.000h | | keine | keine | viel | viel |
| Ritzhärte nach Taber 203 [µm] bei Auflagekraft | | | | | |
| 1,0 N | | 0,17 | 0,10 | | |
| 1,5 N | | 0,70 | 0,21 | | |
| 2,0 N | | 1,20 | 0,75 | | |
| 3,0 N | | 2,50 | 2,10 | | |
| MVR (ISO 1133, 230 °C / 3,8 kg) [cm³/10min] | | 3,4 | 4,3 | 2,4 | 2,0 |
| VET (ISO 306 B) [°C] | | 112,5 | 114,5 | 111,0 | 114,0 |
| Gelbwert DIN 6167 (Lichtart D65/10°, 3mm) | | | | | |
| nach 0 h | | 0,5 | 0,3 | 1,5 | 1,0 |
| nach 10 000 h | | 1,0 | 0,8 | 4,0 | 3,5 |

Der Xenotest nach DIN EN ISO 4892, Teil 2 (Künstliches Bewittern oder Bestrahlen in Geräten - Gefilterte Xenonbogenbetsrahlung) wurde mit einem Xenotest-Gerät, Typ Beta-LM, ausgeführt. Die untere Grenzwellenlänge Lambda G = 300 nm; Schwarz-Standard-Temperatur = 65 +/- 3°C; Beregnungs-/Trockenzyklus: 18 min Beregnung, 102 min Trockenzeit; relative Feuchte in der Trockenperiode = 65 %; Gleichlauf = permanente Bestrahlung der Proben; Bestrahlungsstärke = Norm-Verfahren A (künstliches Bewittern); Messgerät: Xenosensitiv (Lambda 300 - 400 nm), regelbar zwischen 45 und 120 W/m², Normvorgabe und Messung bei 60 W/m².

## Patentansprüche

1. Formmasse, umfassend die folgenden Komponenten
a) einem Copolymer (I), polymerisiert zu 90 - 100 Gew.-% aus Methylmethacrylat, Styrol und Maleinsäureanhydrid und gegebenenfalls 0 -10 Gew.-% weiteren mit Methylmethacrylat copolymerisierbaren Monomeren,
b) einem (Co)polymer (II), das ein Polymerisat aus 95 bis 99,5 Gew.-% Methylmethacrylat und 0,5 bis 5 Gew.-% Methylacrylat ist, mit einer Lösungsviskosität in Chloroform bei 25 °C (ISO 1628 - Teil 6) von 50 bis 55 ml/g, sowie
c) optional üblichen Zusatz, Hilfs- und/oder Füllstoffen
**dadurch gekennzeichnet,**
**dass** das Copolymer (I) eine Lösungsviskosität in Chloroform bei 25 °C (ISO 1628 - Teil 6) von kleiner/gleich 55 ml/g aufweist.

2. Formmasse nach Anspruch 1, **dadurch gekennzeichnet, dass** die Formmasse bzw. ein aus der Formmasse hergestellter Probekörper gleichzeitig folgende Eigenschaften aufweist:
■ eine Vicaterweichungstemperatur VET (ISO 306-B50) von mindestens 109 °C,
**■** einen Schmelzindex MVR (ISO 1133, 230 °C / 3,8 kg) von mindestens 2,5 bis 5,0 cm³/10 min.
■ eine Witterungsbeständigkeit im Xenotest (DIN EN ISO 4893, Teil 2) nach 10.000 Stunden, **gekennzeichnet durch** einen Gelbwert (DIN 6167) von kleiner/gleich 2,0.

3. Formmasse nach Anspruch 1 oder 2, **dadurch gekennzeichnet, dass** die Zunahme des Gelbwertes (DIN 6167) eines aus der Formmasse hergestellten Probekörpers nach Bewitterung im Xenotest (DIN EN ISO 4893, Teil 2) für 10.000 Stunden nicht mehr als 1,5 Einheiten beträgt.

4. Formmasse nach einem oder mehreren der Ansprüche 1 bis 3, **dadurch gekennzeichnet, dass** ein aus der Formmasse hergestellter Probekörper eine Ritzhärte nach Taber 203 bei einer Auflagekraft von 3,0 N von nicht mehr als 3 µm aufweist.

5. Formmasse nach einem oder mehreren der Ansprüche 1 bis 4, **dadurch gekennzeichnet, dass** das Copolymere (I) und das (Co)polymer (II) in einem Verhältnis von 95 zu 5 bis 5 zu 95 Gewichtsteilen vorliegen.

6. Formmasse nach einem oder mehreren der Ansprüche 1 bis 5, **dadurch gekennzeichnet, dass** das Copolymer (I) polymerisiert ist aus
50 bis 90 Gew.-% Methylmethacrylat,
10 bis 20 Gew.-% Styrol und
5 bis 15 Gew.-% Maleinsäureanhydrid

7. Formmasse nach einem oder mehreren der Ansprüche 1 bis 6, **dadurch gekennzeichnet, dass** der Anteil der üblichen Zusatz, Hilfs- und/oder Füllstoffe nicht mehr als 10 Gew.-% beträgt.

8. Formmasse nach einem oder mehreren der Ansprüche 1 bis 7, **dadurch gekennzeichnet, dass** als Hilfsstoff ein Gleitmittel enthalten ist.

9. Formmasse nach einem oder mehreren der Ansprüche 1 bis 8, **dadurch gekennzeichnet, dass** als Hilfsstoff das Formtrennmittel Stearylalkohol enthalten ist.

10. Formkörper, hergestellt ganz oder teilweise aus einer Formmasse nach einem oder mehreren der Ansprüche 1 bis 9 durch thermoplastische Verarbeitung, insbesondere Spritzguß oder Extrusion, durch Coextrusion, Laminieren oder Lackieren.

11. Extrudierter Formkörper nach Anspruch 10, **dadurch gekennzeichnet, dass** es sich um massive Platten, Wellplatten, Hohlkammerplatten, insbesondere Stegplatten, Stegmehrfachplatten, Stegdoppelplatten, Stegdreifach- oder Stegvierfachplatten oder Stegplatten mit, Fachwerkgeometrie handelt.

12. Spritzgegossener Formkörper nach Anspruch 10, **dadurch gekennzeichnet, dass** es sich um Teile von Haushaltsgeräten, Kommunikationsgeräten, Hobby- oder Sportgeräten, Karosserieteile oder Teile von Karosserieteilen im Automobil-, Schiffs- oder Flugzeugbau wie Leuchtenabdeckungen, Instrumentenabdeckungen, Tachometerabdeckungen, Blenden oder Zierleisten handelt.

13. Formkörper nach einem oder mehreren der Ansprüche 10 bis 12, **dadurch gekennzeichnet, dass** er zumindest eine aus der Formmasse coextrudierte, laminierte oder lackierte Schicht aufweist.

14. Verwendung der Formmasse nach einem oder mehreren der Ansprüche 1 bis 9 zur Herstellung von Formkörpern oder Teilen davon durch thermoplastische Verarbeitung, insbesondere Spritzguß oder Extrusion, durch Coextrusion, Laminieren oder Lackieren.

15. Verwendung der Formmasse nach einem oder mehreren der Ansprüche 1 bis 9 zum Beschichten von Oberflächen oder zum Imprägnieren von Holz.

## Claims

1. Molding composition, encompassing the following components
a) a copolymer (I), polymerized to an extent of from 90 to 100% by weight from methyl methacrylate, styrene, and maleic anhydride, and, if appropriate, from 0 to 10% by weight of other monomers copolymerizable with methyl methacrylate,
b) a (co)polymer (II), which is a polymer composed of from 95 to 99.5% by weight of methyl methacrylate and from 0.5 to 5% by weight of methyl acrylate, whose solution viscosity in chloroform at 25°C (ISO 1628 - Part 6) is from 50 to 55 ml/g, and
c) optionally conventional additives, auxiliaries, and/or fillers
**characterized in that**
the solution viscosity of the copolymer (I) in chloroform at 25°C (ISO 1628 - Part 6) is less than or equal to 55 ml/g.

2. Molding composition according to claim 1, **characterized in that** the molding composition or a test specimen produced from the molding composition has the following properties simultaneously:
$ a Vicat softening point VSP (ISO 306-B50) of at least 109°C,
$ a melt index MVR (ISO 1133, 230°C/3.8 kg) of at least from 2.5 to 5.0 cm³/10 min.
$ Xenotest weathering resistance (DIN EN ISO 4893, Part 2) after 10 000 hours **characterized** via a yellowness index (DIN 6167) of less than or equal to 2.0.

3. Molding composition according to claim 1 or 2, **characterized in that** the increase in the yellowness index (DIN 6167) of a test specimen produced from the molding composition is not more than 1.5 units after Xenotest weathering (DIN EN ISO 4893, Part 2) for 10 000 hours.

4. Molding composition according to one or more of claims 1 to 3, **characterized in that** when the Taber 203 scratch hardness of a test specimen produced from the molding composition is determined using an applied force of 3.0 N the value obtained is not more than 3 µm.

5. Molding composition according to one or more of claims 1 to 4, **characterized in that** the copolymer (I) and the (co)polymer (II) are present in a ratio of from 95 to 5 to 5 to 95 parts by weight.

6. Molding composition according to one or more of claims 1 to 5, **characterized in that** the copolymer (I) has been polymerized from
from 50 to 90% by weight of methyl methacrylate,
from 10 to 20% by weight of styrene, and
from 5 to 15% by weight of maleic anhydride.

7. Molding composition according to one or more of claims 1 to 6, **characterized in that** the proportion of the conventional additives, auxiliaries, and/or fillers is not more than 10% by weight.

8. Molding composition according to one or more of claims 1 to 7, **characterized in that** a lubricant is present as auxiliary.

9. Molding composition according to one or more of claims 1 to 8, **characterized in that** the mold-release agent stearyl alcohol is present as auxiliary.

10. Molding, produced entirely or to some extent from a molding composition according to one or more of claims 1 to 9 via thermoplastic processing, in particular injection molding or extrusion, or via coextrusion, lamination, or lacquering.

11. Extruded molding according to claim 10, **characterized in that** the materials are solid sheets, corrugated sheets, panels having cavities, in particular multiple-web sandwich panels, twin-web sandwich panels, triple-web sandwich panels, or quadruple-web sandwich panels, or sandwich panels with lattice geometry, or other sandwich panels.

12. Injection molding according to claim 10, **characterized in that** the materials are parts of household devices, of communications devices, of equipment for hobbies or for sports, or are bodywork parts, or are parts of bodywork parts in automobile construction, in shipbuilding, or in aircraft construction, examples being lamp covers, instrument covers, tachometer covers, panels, or decorative strips.

13. Molding according to one or more of claims 10 to 12, **characterized in that** it has at least one coextruded, laminated, or lacquered layer composed of the molding composition.

14. Use of the molding composition according to one or more of claims 1 to 9 for production of moldings or of parts thereof via thermoplastic processing, in particular injection molding or extrusion, or via coextrusion, lamination, or lacquering.

15. Use of the molding composition according to one or more of claims 1 to 9 for the coating of surfaces or for the impregnation of wood.

## Revendications

1. Masse de moulage, comprenant les composants suivants
a) un copolymère (I), polymérisé à raison de 90-100% en poids à partir de méthacrylate de méthyle, de styrène et d'anhydride de l'acide maléique et le cas échéant de 0-10% en poids d'autres monomères copolymérisables avec du méthacrylate de méthyle,
b) un (co)polymère (II), qui est un polymère constitué par 95 à 99,5% en poids de méthacrylate de méthyle et 0,5 à 5% en poids d'acrylate de méthyle, présentant une viscosité en solution dans du chloroforme à 25°C (ISO 1628 - partie 6) de 50 à 55 ml/g, ainsi que
c) éventuellement des additifs, des adjuvants et/ou des charges usuel(le)s
**caractérisée en ce que** le copolymère (I) présente une viscosité en solution dans du chloroforme à 25°C (ISO 1628 - partie 6) inférieure/égale à 55 ml/g.

2. Masse de moulage selon la revendication 1, **caractérisée en ce que** la masse de moulage ou, selon le cas, une éprouvette préparée à partir de la masse de moulage présente simultanément les propriétés suivantes :
- une température de ramollissement de Vicat VET (ISO 306-B50) d'au moins 109°C,
- un indice de fusion MVR (ISO 1133, 230°C/3,8 kg) d'au moins 2,5 à 5,0 cm³/10 min,
- une résistance aux intempéries dans le xénotest (DIN EN ISO 4893, partie 2) après 10 000 heures,
**caractérisée par** un indice de jaune (DIN 6167) inférieur/égal à 2,0.

3. Masse de moulage selon la revendication 1 ou 2, **caractérisée en ce que** l'augmentation de l'indice de jaune (DIN 6167) d'une éprouvette préparée à partir de la masse de moulage après une exposition aux intempéries dans le xénotest (DIN EN ISO 4893, partie 2) pendant 10 000 heures n'est pas supérieure à 1,5 unité.

4. Masse de moulage selon l'une ou plusieurs des revendications 1 à 3, **caractérisée en ce qu'**une éprouvette préparée à partir de la masse de moulage présente une résistance aux rayures selon Taber 203 à une force d'appui de 3,0 N qui n'est pas supérieure à 3 µm.

5. Masse de moulage selon l'une ou plusieurs des revendications 1 à 4, **caractérisée en ce que** le copolymère (I) et le (co)polymère (II) se trouvent dans un rapport de 95:5 à 5:95 parties en poids.

6. Masse de moulage selon l'une ou plusieurs des revendications 1 à 5, **caractérisée en ce que** le copolymère (I) est polymérisé à partir de
- 50 à 90% en poids de méthacrylate de méthyle,
- 10 à 20% en poids de styrène et
- 5 à 15% en poids d'anhydride de l'acide maléique.

7. Masse de moulage selon l'une ou plusieurs des revendications 1 à 6, **caractérisée en ce que** la proportion des additifs, adjuvants et/ou charges usuel(le)s n'est pas supérieure à 10% en poids.

8. Masse de moulage selon l'une ou plusieurs des revendications 1 à 7, **caractérisée en ce qu'**un lubrifiant est contenu come adjuvant.

9. Masse de moulage selon l'une ou plusieurs des revendications 1 à 8, **caractérisée en ce que** l'agent de démoulage alcool stéarylique est contenu comme adjuvant.

10. Corps façonné, préparé totalement ou partiellement à partir d'une masse de moulage selon l'une ou plusieurs des revendications 1 à 9 par transformation thermoplastique, en particulier par moulage par injection ou par extrusion, par coextrusion, par laminage ou laquage.

11. Corps façonné extrudé selon la revendication 10, **caractérisé en ce qu'**il s'agit de plaques massives, de plaques ondulées, de plaques à chambres creuses, en particulier de plaques à âmes, de plaques multiples à âmes, de plaques doubles à âmes, de plaques triples ou quadruples à âmes ou de plaques à âmes avec une géométrie en treillis.

12. Corps façonné moulé par injection selon la revendication 10, **caractérisé en ce qu'**il s'agit d'éléments d'appareils domestiques, d'appareils de communication, d'appareils de loisir ou de sport, d'éléments de carrosserie ou d'éléments de parties de carrosserie dans la construction automobile, de bateaux ou d'avions, tels que des protections de luminaires, des protections d'instruments, des protections de tachymètre, des écrans ou des cadres décoratifs.

13. Corps façonné selon l'une ou plusieurs des revendications 10 à 12, **caractérisé en ce qu'**il présente au moins une couche coextrudée, laminée ou laquée en la masse de moulage.

14. Utilisation de la masse de moulage selon l'une ou plusieurs des revendications 1 à 9 pour la préparation de corps façonnés ou de parties de ceux-ci par transformation thermoplastique, en particulier par moulage par injection ou par extrusion, par coextrusion, par laminage ou laquage.

15. Utilisation de la masse de moulage selon l'une ou plusieurs des revendications 1 à 9 pour le revêtement de surfaces ou pour l'imprégnation du bois.
